# DEMANDE DE BREVET EUROPEEN

(11) **EP 1 095 853 A1**
(43) Date de publication de la demande: **02.05.2001**
(21) Numéro de dépôt: 00402814.8
(22) Date de dépôt: 12.10.2000
(51) Int. Cl.: B64G 1/64, B64G 1/44

(54) **Atténuateur de chocs pour pied de gerbage**

(30) Priorité: 28.10.1999 FR 9913494
(71) Demandeur: ALCATEL, 75008 Paris (FR)
(72) Inventeur: Guillon, Gérard, 06210 Mandelieu (FR); Favard, Philippe, 06210 Mandelieu (FR)
(74) Mandataire: Smith, Bradford Lee

(57) **Abrégé**

L'invention concerne un atténuateur de choc pour pied de gerbage. De tels pieds de gerbage sont utilisés dans les satellites pour le déploiement des appendices. L'invention propose de prévoir sur le pied de gerbage un amortissement limitant les chocs issus du dégerbage. Elle propose un amortissement (14) sous la cisaille pyrotechnique (12), un amortissement (16, 18) aux extrémités du tirant de gerbage (10) et un amortissement (20) du corps (8) du pied de gerbage.

L'invention permet un amortissement des chocs à leur source, et évite ainsi une qualification séparée des équipements pour la tenue aux chocs.

## Description

L'invention concerne les satellites, et plus précisément les pieds de gerbage des appendices de satellites.

Un satellite ou sonde spatiale possède différents appendices à déployer tel un générateur solaire, un réflecteur d'antenne ou un radiateur, durant sa phase de transfert, de mise à poste ou à une autre étape bien déterminée de sa mission. Ces appendices sont initialement repliés contre la plate-forme du satellite en une position dite position stockée. Le maintien en position stockée est assuré par un tirant de gerbage, qui relie la plate-forme et l'appendice. Le pied de gerbage assure le maintien du tirant de gerbage sur la plate-forme. La définition du pied de gerbage et la tension dans la colonne de gerbage donnée par un tirant assure une rigidité minimale dans la liaison de ces appendices sur la plate-forme en configuration stockée.

Le déploiement d'un appendice nécessite la rupture ou la libération du tirant de gerbage. Les dispositifs de rupture ou de libération sont encore en grande majorité de type pyrotechnique - à cisaille ou écrou libérateur - pour des raisons notamment de fiabilité démontrée. D'autres solutions existent : FOKKER a développé un tirant composé de câbles de Kevlar dont la rupture progressive est obtenue par fusion électrique. Ce procédé est limité en tension de gerbage et en raideur de liaison, et par conséquent ne peut s'appliquer aux gros générateurs solaires nécessaires aux nouveaux satellites de télécommunication par exemple. D'autres, tel que NEA Inc., dilatent électriquement un composant libérant graduellement un ressort qui maintient serré un écrou fendu en pétale dans lequel est vissé le tirant de gerbage. Le dimensionnement de ce dernier peut admettre toute sorte de tension envisageable.

US-A-5 878 980 propose un atténuateur circulaire, à monter en série entre une section de charge et une section de propulsion d'un satellite. L'atténuateur sert de filtre pour supprimer ou minimiser les chocs et les fréquences de vibration, afin de protéger les composants électroniques délicats de la charge. Ce document ne mentionne aucunement le problème des chocs de dégerbage, et concerne uniquement l'isolation entre la charge et le propulseur.

US-A-5 390 891 propose un dispositif d'absorption de chocs, destiné à être utilisé entre une structure de support et une plate-forme sur laquelle sont montés des composants sensibles, tels que des composants électroniques. Ce dispositif permet d'amortir les chocs pyrotechniques lors du largage des différents étages du lanceur. Le dispositif présente des éléments de ressort à lames, présentant une constante d'amortissement faible, et une fréquence de résonance faible. Comme US-A-5 878 980, ce document concerne l'isolation entre la charge et le propulseur, mais ne mentionne pas le problème des chocs de dégerbage.

JP-A-8 281859 propose un dispositif d'amortissement du même genre que les deux précédents. Il comprend un anneau viscoélastique, et un espaceur, qui sont pris en sandwich entre une plaque de support et un flasque.

JP-A-8 219134 propose un écrou de séparation reposant sur une plaque de support. L'écrou de séparation est pourvu sur l'épaulement de son embase d'amortisseurs qui absorbent les chocs au moment de la séparation. L'embase de l'écrou et la surface de montage son en contact direct assurant un contact métal-métal sans amortissement.

L'invention vise à résoudre le problème nouveau des chocs provoqués par le dégerbage. En effet, les nombreux équipements électroniques sont de plus en plus proches de ces points de gerbage. Les différents dispositifs pyrotechniques peuvent générer des chocs haute fréquence à des niveaux suffisamment élevés pour causer des dommages - circuit intégré détérioré par exemple - ou des réductions de durée de vie des équipements avoisinants, ou encore, générer des informations erronées dues à des changements d'état de composants - basculement de relais par exemple.

L'invention propose une solution au problème des chocs engendrés par les pieds de gerbage, lors du déploiement des appendices d'un satellite. Elle propose une solution qui amortit les chocs de toute nature lors de la rupture du pied de gerbage. Elle peut dans certains modes de réalisation assurer la même rigidité du pied de gerbage que dans les solutions connues. Dans d'autres modes de réalisation, la rigidité diminue au profit de l'amortissement.

Plus précisément, l'invention propose un pied de gerbage avec un amortissement limitant les chocs issus du dégerbage. L'amortissement limite les chocs avant et après le dégerbage. De préférence, l'amortissement est un amortissement viscoélastique, un amortissement par mousse métallique, ou un amortissement par alliage métallique tel qu'un alliage Nickel Titane.

Dans un premier mode de réalisation, le pied comprend une cisaille pyrotechnique montée sur un amortissement. Dans ce cas, il est avantageux que l'amortissement présente un matériau viscoélastique s'étendant suivant l'axe de la cisaille.

Dans un deuxième mode de réalisation, le pied connecte un tirant de gerbage, présentant à au moins une extrémité un amortissement, à une plate-forme. Dans ce cas, il est avantageux que l'amortissement à l'extrémité du tirant amortisse les chocs en traction par le tirant, et/ou les chocs en compression par le tirant.

De préférence, l'amortissement à l'extrémité du tirant présente un matériau viscoélastique.

Dans un troisième mode de réalisation, le pied présente un corps avec un amortissement dans sa partie inférieure. De préférence, l'amortissement comprend un matériau amortissant travaillant en traction/compression, et/ou un matériau amortissant travaillant en cisaillement.

D'autres caractéristiques et avantages de l'invention apparaîtront à la lecture de la description qui suit de modes de réalisation de l'invention, donnés à titre d'exemple et en référence aux dessins annexés, qui montrent
- figure 1, une représentation schématique d'un pied de gerbage selon l'invention, avant dégerbage ;
- figure 2, une représentation schématique du pied de la figure 1, après dégerbage;
- figure 3,une représentation plus détaillée du corps du pied de la figure 1;
- figure 4, une représentation graphique des caractéristiques d'amortissement du pied selon l'invention;
- figure 5 une représentation d'encore un autre mode de réalisation d'un pied selon l'invention.

L'invention propose, pour atténuer les chocs subis lors du dégerbage, de munir le pied de gerbage d'un amortissement viscoélastique, qui permet de limiter les chocs issus du dégerbage. L'invention propose d'atténuer les chocs haute fréquence à leur source, pour éviter de devoir atténuer séparément chaque équipement.

Les chocs ont de multiples sources qu'ils trouvent d'une manière générale soit avant le dégerbage soit après c'est-à-dire avant la libération ou la rupture du tirant soit après. Avant la libération ou la rupture du tirant, ils proviennent du déclenchement puis de l'agissement du dispositif de rupture ou de libération du tirant. Après la rupture ou la libération du tirant les chocs sont provoqués par les mouvements mécaniques ultérieurs. A titre d'exemple, avant la libération ou la rupture du tirant, les chocs peuvent provenir du déclenchement pyrotechnique de la charge et de la percussion du couteau sur le tirant qui s'en suit. Après la libération ou la rupture du tirant, les chocs peuvent ête provoqués par les mouvements du tirant vers le bas, du fait de la tension dans le tirant avant rupture.

On évite ainsi de devoir qualifier séparément chaque équipement pour la tenue aux chocs. L'atténuation des chocs consiste en majeure partie à étaler l'énergie libérée par les chocs. Dans la suite, l'invention est décrite en référence à l'exemple d'une cisaille pyrotechnique. Elle s'applique aussi à d'autres types de pieds de gerbage.

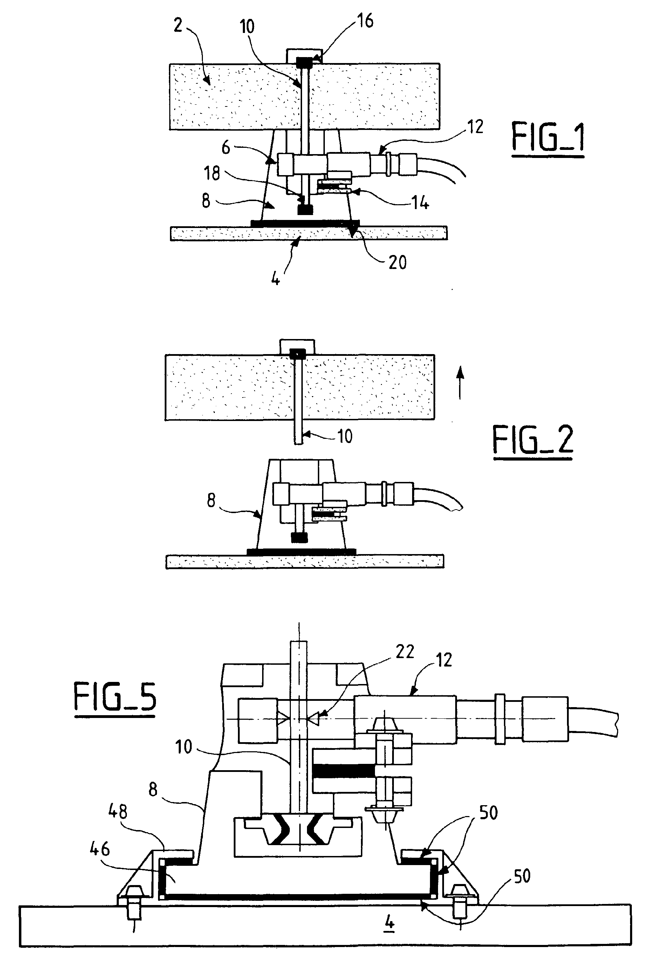

La figure 1 montre une représentation schématique d'un pied de gerbage selon l'invention, avant dégerbage. On reconnaît sur la figure l'appendice 2 à déployer. Cet appendice est maintenu contre la plate-forme du satellite 4 par le pied de gerbage 6. Celui-ci comprend un corps de pied de gerbage 8, un tirant de gerbage 10 et une cisaille pyrotechnique 12. Celle-ci présente un couteau, déplacé par une charge pyrotechnique contre une enclume; le couteau peut présenter sur son bord d'attaque une pente qui favorise sa pénétration. Le pied de gerbage est fixé sur la plate-forme du satellite, et maintient une extrémité du tirant de gerbage. L'autre extrémité du tirant de gerbage est maintenue par l'appendice, de telle sorte que le tirant de gerbage empêche le déploiement de l'appendice. La cisaille pyrotechnique 12 est adaptée à couper le tirant de gerbage pour permettre le dégerbage de l'appendice.

Comme représenté sur la figure 1, l'invention propose dans un premier mode de réalisation, de prévoir un amortissement viscoélastique 14 pour la cisaille pyrotechnique 12. Cet amortissement permet d'atténuer la partie du choc provoquée par le déclenchement de la cisaille pyrotechnique, et par la combustion de la poudre dans la cisaille. Du fait de l'amortissement, le choc de déflagration n'est pas transmis au support de la cisaille, et partant, n'est pas transmis au support du pied de gerbage. Cet amortissement 14 pour la cisaille pyrotechnique permet aussi de limiter les chocs nés de la percussion du couteau de cisaille sur le tirant, et du déplacement du couteau de la cisaille lors de la pénétration dans le tirant. Pendant cette phase, le choc de percussion ou le choc provoqué par la flexion du tirant ne sont pas transmis au support de la cisaille, ni au corps du pied dégerbage.

De la même façon, après la rupture du tirant, l'amortissement viscoélastique sous la cisaille permet d'amortir les chocs provoqués par la percussion du couteau de la cisaille pyrotechnique sur son enclume.

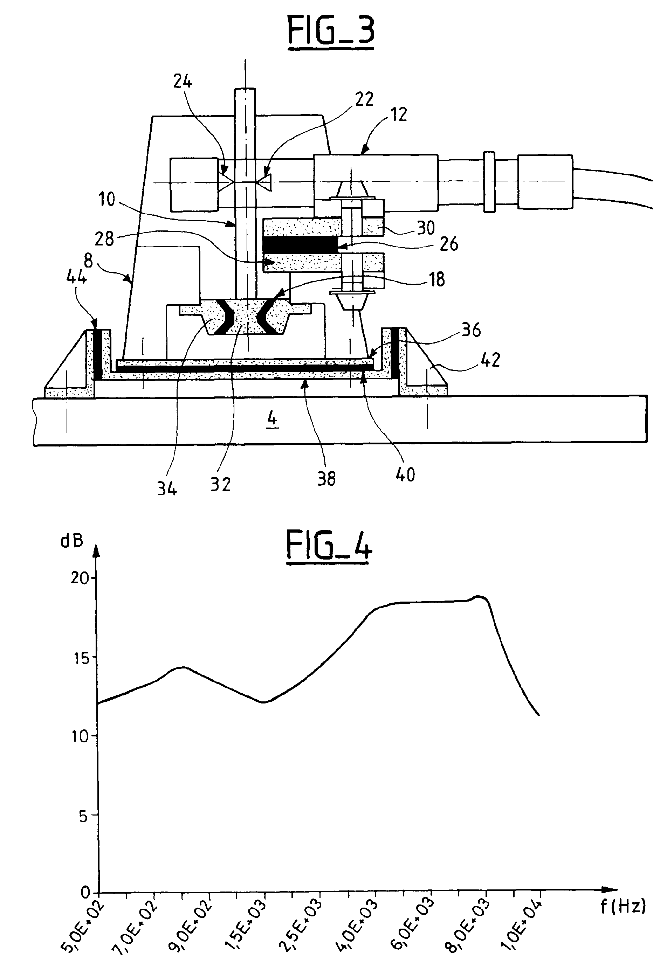

Le premier mode de réalisation de l'invention a l'avantage de ne pas affecter la raideur du pied de gerbage. Il s'agit d'un montage "en parallèle" de l'amortissement, par rapport à la rigidité structurelle de la colonne gerbée. Il permet la définition d'un premier mode propre de la cisaille suspendue juste au-dessus de celui du satellite ou de l'appendice gerbé. Des détails de réalisation de l'amortissement de la cisaille sont fournis ci-dessous en référence à la figure 3.

Dans un deuxième mode de réalisation, l'invention propose de prévoir un amortissement viscoélastique aux extrémités du tirant de gerbage. Apparaissent schématiquement sur la figure des amortissements 16 et 18 aux extrémités respectives du tirant de gerbage. En position de stockage, les amortissements 16 et 18 n'affectent pas non plus la raideur du pied de gerbage; ils n'ont qu'une influence minimale sur la raideur de la colonne gerbée, c'est-à-dire sur la colonne formée de la plate-forme, du pied de gerbage, du tirant et de l'appendice.

Lors de la percussion du couteau sur le tirant, le tirant transmet le choc à ses ancrages sur la plate-forme comme sur l'appendice, mais à travers les amortissements 16 et 18. Lors du déplacement du tirant par flexion et pénétration du couteau, les amortissements agissent pour amortir la transmission du choc à la plate-forme et à l'appendice. Enfin, lors de la rupture du tirant, une impulsion est donnée aux deux morceaux du tirant par la libération brutale de la tension dans le tirant et la vitesse induite par la pente du couteau. A cet instant, les amortissements limitent les chocs induits par la percussion des deux morceaux du tirant sur l'appendice et la plate-forme.

Des détails des amortissements 16 et 18 apparaissent sur la figure 3. Par ailleurs, on peut ne prévoir d'amortissement qu'à une extrémité du tirant, en fonction des chocs à éviter ou limiter.

Dans un troisième mode de réalisation, l'invention propose de prévoir sous le pied de gerbage un amortissement 20, sous la forme d'une semelle. Cet amortissement entre le pied de gerbage et la plate-forme a l'avantage d'envelopper toute source de choc - tirant, cisaille ou écrou libérateur -. En revanche, l'insertion d'un tel amortissement a une influence sur la raideur structurale du pied de gerbage. Comme expliqué plus bas, l'amortissement peut être défini de sorte à éviter toute modification modale du satellite; on peut par exemple imposer que la diminution qu'induit l'insertion de la semelle dans la raideur du pied de gerbage soit inférieure à 20%, voire inférieure à 10%. Dans ce cas, seul le comportement de l'appendice nécessite une vérification par analyse modale. Dans l'exemple de la figure, l'amortissement 20 est sous le corps du pied de gerbage; on pourrait aussi prévoir un amortissement intégré dans le corps du pied de gerbage, et non pas à l'interface entre le pied de gerbage et la plate-forme, comme dans le mode de réalisation de la figure 5. Des détails de l'amortissement 20 apparaissent à la figure 3.

Les trois modes de réalisation décrits en référence aux figures 1 et 2 peuvent être mis en oeuvre indépendamment les uns des autres, deux par deux, ou tous les trois ensembles. Chacun des modes de réalisation est passif et apporte sa part d'atténuation des chocs.

La figure 2 montre une vue schématique du pied de gerbage, après dégerbage. La cisaille 12 a été déclenchée, et a rompu le tirant de gerbage 10. Celui-ci libère l'appendice 2, qui se déploie comme indiqué par la flèche sur la figure.

L'invention permet d'éviter ou limiter les chocs ou pics d'accélération à des fréquences supérieures à 1 kHz, par rapport à une solution non-amortie. Dans cette plage de fréquence, chacun des modes de réalisation de l'invention, considéré seul, apporte un gain d'au moins 6 à 8 dB, soit une diminution des niveaux d'accélération d'un rapport de 2 à 2,5. L'utilisation conjointe des trois modes de réalisation permet d'atteindre un gain minimum de 12 dB, soit une rapport de 4 au moins dans les niveaux d'accélération.

Les différents amortissements de l'invention permettent de créer une rupture d'impédance entre l'amont et l'aval du dispositif par rapport à la source du choc, créant une atténuation du signal. Cette atténuation se traduit par un étalement du spectre de choc vers les hautes et basses fréquences en abaissant ses niveaux les plus élevés. Il n'y a donc pas forcément dissipation d'énergie par amortissement, ce qui permet une dégradation des raideurs de liaison limitée. Cette rupture d'impédance est favorisée par la géométrie des amortissements ou atténuateurs, et par le choix de matériau amortissant utilisé.

La figure 3 montre une représentation plus détaillée du corps du pied de la figure 1; y sont portés les détails des différents amortissements. On reconnaît sur la figure les éléments décrits en référence à la figure 1, qui ne sont pas décrits de nouveau. Apparaissent en outre le couteau de cisaille 22 et l'enclume 24.

Pour ce qui est du premier mode de réalisation, on voit sur la figure que l'amortissement 14 est formé d'un matériau amortissant 26, disposé entre deux plaques de support 28 et 30. La plaque inférieure 28 est fixée sur le corps 8 du pied de gerbage, dans l'exemple de la figure par des vis. La cisaille est fixée sur la plaque supérieure 30, dans l'exemple encore par des vis. Comme expliqué plus bas, le matériau amortissant est par exemple un matériau viscoélastique de type silicone. Un tel ensemble d'amortissement avec deux plaques et un matériau amortissant est de préférence prévu sous chaque fixations de la cisaille, en s'intercalant entre la cisaille et le corps du pied de gerbage.

De préférence, le matériau amortissant présente une forme allongée, et sa longueur s'étend selon l'axe de la cisaille. De la sorte, le matériau amortissant travaille essentiellement en cisaillement sous l'effet du choc mécanique du couteau contre le tirant, puis du choc du couteau sur l'enclume. Cet effet de cisaillement améliore la rupture d'impédance.

On peut aussi prévoir que les atténuateurs situés de part et d'autre du corps de la cisaille sont liés rigidement entre eux pour ne former qu'un seul composant, avec une seule plaque de support. Cette solution présente l'avantage de ne pas solliciter le matériau amortissant en torsion lors du serrage des vis de fixation.

La contrainte de dimensionnement de l'amortissement réside dans la garantie de non-contact du couteau de la cisaille avec le tirant sous les sollicitations quasi-statiques ou dynamiques maximales associées aux plages de température. On rappelle les plages habituelles de température de qualification pour les applications satellites, qui s'étalent de -45°C à +90°C pour le mode opérationnel du dispositif de gerbage. A titre d'exemple, pour une cisaille dite "boostée" ou non de la famille 117710 de la société UPCO, ou de la famille 7CCD45 de la société Dassault, on pourrait utiliser un matériau amortissant du type silicone, présent sous forme de deux rubans d'une taille unitaire de 53 x 6 x 1,5 mm³. Une cisaille est dite "boostée" lorsqu'elle présente une charge pyrotechnique supplémentaire, en plus de l'initiateur.

Le premier mode de réalisation peut être mis en oeuvre, avec une faible masse ajoutée. On peut assurer un amortissement de la cisaille, avec une masse ajoutée de l'ordre de 5 g par dB gagné.

La figure 3 montre uniquement l'amortissement 18 à l'extrémité du tirant. Comme le montre la figure, l'extrémité du tirant est fixée par exemple par soudage ou vissage à une pièce métallique mâle 32. Celle-ci présente dans l'exemple une forme de sablier, ou de double cône, dont l'axe est confondu avec l'axe du tirant. La pièce métallique mâle 32 est entourée d'une pièce métallique femelle 34, qui présente une forme complémentaire, et qui est fixée au corps 8 du pied de gerbage. Entre les pièces 32 et 34 se trouve le matériau amortissant. Pour le montage, la pièce femelle 34 est typiquement assemblée autour de la pièce mâle 32, le matériau amortissant étant disposé autour de la pièce mâle ou étant injecté après montage de la pièce femelle.

Cette forme des pièces 32 et 34 assure le maintien du tirant de gerbage, même en cas de rupture du matériau isolant. On perdrait alors les effets d'amortissement, mais sans pour autant provoquer un dégerbage accidentel par délogement de l'extrémité du tirant de gerbage.

Par ailleurs, la forme du matériau isolant assure un amortissement dans toutes les phases où sont générés des chocs. Lorsque le tirant est sous tension, le cône inférieur est comprimé, et le matériau amortissant qui s'y trouve amorti les chocs provoqués par la percussion du couteau sur le tirant lors du déclenchement de la cisaille pyrotechnique. Après rupture du tirant, comme expliqué plus haut, la partie inférieure du tirant est animée d'une accélération dirigée vers le bas, du fait de la tension dans le tirant avant la rupture. Cette accélération est absorbée par le matériau amortissant se trouvant dans le cône supérieur.

Il est avantageux que les cônes présentent des angles au sommet de l'ordre de 45°. On notera en outre que la fourniture des amortissements 16 et 18 peut être standardisée, par définition de fournitures élémentaires s'adaptant à tout type de pied de gerbage. Comme pour le premier mode de réalisation, on peut assurer un amortissement avec une faible masse ajoutée, typiquement de l'ordre de 5 g par dB gagné.

Les dimensions de l'amortissement sont notamment déterminées en fonction du fluage accepté, de sorte à conserver une stabilité de la tension de gerbage sous l'environnement spécifié. Un matériau visco-élastique de type silicone est quasi-incompressible; le confiner dans un volume quasi-fermé comme dans l'exemple proposé favorise les limitations du fluage. Le silicone a par ailleurs des propriétés stables dans la plage de température précitée.

La figure 3 montre enfin un amortissement selon le troisième mode de réalisation de l'invention. Dans l'exemple, on a représenté un amortissement sollicité à la fois en cisaillement et en traction-compression. Le corps 8 du pied de gerbage est fixé sur une plaque 36. Cette plaque est disposée dans un support 38 présentant un fond et un bord perpendiculaire au fond. La plaque 36 est reliée au fond du support 38 par une couche 40 de matériau amortissant. La plate-forme présente un ou plusieurs renvois 42 définissant des parois sensiblement parallèles au bord du support 38. Le bord du support 38 est relié aux parois des renvois par une couche de matériau amortissant 44. Dans la configuration la plus simple, le support présente un bord cylindrique, et le renvoi a une forme d'anneau. La couche de matériau amortissant est annulaire. On comprend que la couche 40 travaille en traction lorsque le tirant est sous tension, et amortit notamment les chocs de percussion du couteau sur le tirant. Cette couche travaille en compression après la rupture du tirant, pour absorber le choc provoqué par la rupture.

La couche 44 travaille en cisaillement, lorsque le tirant est sous tension, ou après sa rupture. La raideur structurale du pied de gerbage avec un tel amortissement dépend des dimensions des différents éléments de l'amortissement, et notamment du débattement possible du support. Il est possible de déterminer cette raideur afin d'éviter toute modification modale du satellite. Seul l'appendice nécessite une vérification par analyse modale. Avec un diamètre voisin de 100 mm pour l'amortissement 20, on arrive à un compromis acceptable entre la raideur du pied de gerbage, notamment en rotation ou basculement du pied, et l'encombrement du pied sur la plate-forme. En raideur de translation un montage du type de celui de la figure 3 assure une raideur supérieure à 10⁶ N/m. En raideur de rotations, on obtient des valeurs supérieures ou égales à 3.10³ N.m/rad.

La figure 4 montre une représentation graphique des caractéristiques d'amortissement d'un pied selon l'invention; on a porté en abscisse les fréquences en Hz, et en ordonnées l'atténuation en dB. Ce graphe présente l'atténuation obtenue avec un pied de gerbage équipé d'une solution du type semelle seule, du type du troisième mode de réalisation, par rapport à un pied rigidement fixé sur la plate-forme du satellite. L'amortissement est réalisé à l'aide de silicone qualifié à l'environnement spatial, qui est vendu par la société Dow Corning sous la référence DC93500. Les raideurs structurelles du corps de ce pied de gerbage sont dégradées d'un facteur 20 en translation et 100 en rotation, par rapport au pied fixe. Comme le montre la figure, le gain est supérieure à 10 dB dans toute la plage de fréquence, et est supérieur à 12,5 dB au dessus de 1 kHz. L'association à cette configuration d'un découpleur de cisaille du genre du premier mode de réalisation permet d'accroître ce gain de 6 dB minimum sans affecter les rigidités de la colonne gerbée.

La figure 5 montre un autre mode de réalisation d'un pied de gerbage selon l'invention. Dans l'exemple de la figure 5, l'amortissement 20 est intégré au corps 8 du pied de gerbage : dans sa partie inférieure, le corps présente une base cylindrique 46, qui est enserrée dans un logement annulaire 48. Un joint visco-élastique 50 en trois parties est disposé entre la base et son logement. Le mode de réalisation de la figure 5 présente les avantages suivants. Les joints sont dans un volume quasi-fermé, ce qui augmente la rigidité du pied de gerbage. La rupture éventuelle d'un des joints visco-élastiques n'entraîne pas la perte de la liaison avec la plate-forme de l'appendice gerbé. Le joint est protégé des radiations par les parois métalliques du corps du pied de gerbage, ce qui réduit son vieillissement et le risque associé de désagrégation. Le joint est confiné, et son éventuelle désagrégation du fait du vieillissement durant la vie du satellite ne risque pas de provoquer une libération de particules pouvant polluer le satellite. Enfin, la fixation du pied de gerbage n'implique aucune opération sur la plate-forme autre que le vissage du logement.

Dans la description qui précède, on a mentionné un amortissement viscoélastique. On peut à cet effet utiliser un matériau à base de caoutchouc, ou encore un matériau stable en température, comme du silicone. On peut plus généralement utiliser des matériaux élastomères.

On peut aussi prévoir selon l'invention un amortissement par un matériau qui n'est pas viscoélastique, et par exemple un amortissement par un produit métallique. A cet effet, on peut utiliser un alliage Nickel Titane, ou encore une mousse métallique. On peut remplacer par le matériau métallique l'ensemble de l'amortissement, par exemple dans le cas d'un alliage NiTi, ou encore utiliser comme matériau amortissant une mouse métallique.

Ces dernières solutions présentent l'avantage d'éviter toute dégradation par l'oxygène monoatomique en orbite, ou par radiations, comme ce pourrait être le cas pour des polymères viscoélastiques. Ces inconvénients ne sont pas déterminants et n'excluent pas l'usage de tels polymères, du fait que la durée de séjour en orbite basse avant déploiement est généralement suffisamment courte. Le silicone présente aussi par rapport aux élastomère à base caoutchouc l'avantage de ne pas ou peu dégazer; on évite de polluer l'environnement satellite, par exemple les cellules sollaires d'un générateur solaire.

Bien entendu, la présente invention n'est pas limitée aux exemples et modes de réalisation décrits et représentés, mais elle est susceptible de nombreuses variantes accessibles à l'homme de l'art. Ainsi, on a décrit l'exemple d'une cisaille pyrotechnique. On peut appliquer l'invention à d'autres types de dispositifs de rupture du tirant de gerbage, tels que ceux mentionnés à titre d'exemple plus haut. Dans les exemples de la figure 3, on a représenté des amortissements avec une seule couche de matériau amortissant. On peut aussi intégrer plusieurs étages de matériau amortissant, dans tous les modes de réalisation. Dans la semelle, on peut prévoir plusieurs couches, soit en traction / compression, soit en cisaillement, soit les deux.

## Revendications

1. Un pied de gerbage avec un amortissement limitant les chocs issus du dégerbage.

2. Un pied de gerbage selon la revendication 1, caractérisé en ce que l'amortissement limite les chocs avant et après le dégerbage.

3. Le pied de gerbage de la revendication 1 ou 2, caractérisé en ce que l'amortissement est un amortissement viscoélastique.

4. Le pied de gerbage de la revendication 1 ou 2, caractérisé en ce que l'amortissement est un amortissement par mousse métallique.

5. Le pied de gerbage de la revendication 1 ou 2, caractérisé en ce que l'amortissement est un amortissement par alliage métallique tel qu'un alliage Nickel Titane.

6. Le pied de gerbage de l'une des revendications 1 à 5, caractérisé en ce qu'il comprend une cisaille pyrotechnique (12) montée sur un amortissement (14).

7. Le pied de gerbage de la revendication 6, caractérisé en ce que l'amortissement présente un matériau viscoélastique s'étendant suivant l'axe de la cisaille.

8. Le pied de gerbage de l'une des revendications 1 à 7, caractérisé en ce qu'il connecte un tirant de gerbage (10), présentant à au moins une extrémité un amortissement (16, 18), à une plate-forme (4).

9. Le pied de gerbage de la revendication 8, caractérisé en ce que l'amortissement à l'extrémité du tirant amortit les chocs en traction par le tirant.

10. Le pied de gerbage de la revendication 8 ou 9, caractérisé en ce que l'amortissement à l'extrémité du tirant amortit les chocs en compression par le tirant.

11. Le pied de gerbage de la revendication 8, 9 ou 10, caractérisé en ce que l'amortissement à l'extrémité du tirant présente un matériau viscoélastique.

12. Le pied de gerbage de l'une des revendications 1 à 11, caractérisé en ce qu'il présente un corps (8) avec un amortissement (20) dans sa partie inférieure.

13. Le pied de gerbage de la revendication 12, caractérisé en ce que l'amortissement comprend un matériau amortissant (40) travaillant en traction/compression.

14. Le pied de gerbage de la revendication 12 ou 13, caractérisé en ce que l'amortissement comprend un matériau amortissant (44) travaillant en cisaillement.
